# EUROPEAN PATENT SPECIFICATION

(11) **EP 3 337 360 B1**
(45) Date of publication and mention of the grant of the patent: **15.05.2019**
(21) Application number: 16751586.5
(22) Date of filing: 12.08.2016
(51) Int. Cl.: A47G 7/06, A47G 7/07, A01G 5/04, B65D 85/50

(54) **SUPPORT FOR BUNCHES OF FLOWERS**
TRÄGER FÜR BLUMENSTRÄUSSE
SUPPORT POUR BOUQUETS DE FLEURS

(30) Priority: 20.08.2015 IT UB20153172
(43) Date of publication of application: 27.06.2018
(73) Proprietor: Plastec S.r.l., 27030 Palestro (PV) (IT)
(72) Inventor: BERTOLA, Pierangelo, 27030 Palestro PV (IT); BERTOLA, Paolo, 27030 Palestro PV (IT); BERTOLA, Sonia, 27030 Palestro PV (IT)
(74) Representative: Valentini, Giuliano
(86) International application number: PCT/EP2016/069287
(87) International publication number: WO 2017/029237

(56) References cited:
- EP-A1- 0 881 167
- EP-A1- 1 958 497
- EP-A1- 2 730 521
- WO-A2-2009/021937

## Description

The present invention relates to a support used to exhibit and preserve bunches or bouquets of flowers. The support allows keeping flowers in vertical position in the center of the support and also functions as a container to create floral arrangements.

Supports of this type are used to make "bouquet with water reserves" for the flowers kept by the support. In fact, the support is wrapped with a thin sheet of plastic material, for example cellophane, polypropylene or other suitable waterproof material, and subsequently water is introduced inside the so made packaging.

The European Patent Application n. EP-0881167 describes a plastic support for bunches of flowers comprising a base element from which a plurality of arms depart, made as a single piece with the base element, which are distributed in equidistant positions along the perimeter of the base element. The arms are elastically foldable inward, i.e. towards the central axis perpendicular to the bottom wall of the base element. The arms have free ending portions provided with a restraining tooth on which a string (or raffia cordage) stands and keeps the arms in their folded configuration; the free ends of the arms so keep the stems of the bunch of flowers.

The florist, after having arranged the floral arrangement in the center of the support, folds the arms inward, to keep in position the bunch of flowers in the center of the support and ties the raffia cordage around the arms at the restraining teeth. Thus, the support with the bunch of flowers is wrapped in the sheet of plastic material and the packaging is completed with a decorative ribbon closed in turn at the height of the raffia cordage arranged inside. Thus, the packaging is filled with a certain amount of water to preserve the freshness of the flowers.

The use of these types of support could be difficult when there's a need to manually close the arms around the stems of the bunch of flowers and to tie the raffia cordage.

Thus, making the packaging could be laborious, mostly when there's the need to prepare several packaging intended for the exposure and/or sales.

Thus, object of the present invention is to provide a support for bunches or bouquets of flowers, allowing making packaging easier and/or quicker.

Another object of the present invention is to provide a support for bunches or bouquets of flowers allowing easy making of the packaging both manually and automatically.

These objects are achieved thanks to a support for bunches or bouquets of flowers according to claim 1. Further characteristics of the present invention are reported in the dependent claims.

The support for bunches or bouquets of flowers according to the present invention allows showing and preserving the flowers keeping them in vertical position. A support of this type comprises a base element, having a bottom wall, and a plurality of arms extending from the base element and which are distributed along the perimeter of the base element.

According to a peculiar characteristic of the present invention, the bottom wall of the base element is elastically deformable between a stable convex shape, at which the free ends of the arms are in a position distal from the central axis perpendicular to the bottom wall of the base element, and a stable concave shape at which the free ends of the arms are in a position proximal to the central axis perpendicular to the bottom wall of the base element.

When the support is in the "open" condition, i.e. with the free ends of the arms in a position distal from the central axis, is sufficient to exert a light pressure on the bottom wall of the base element to bring the support in the "closed" condition, i.e. with the free ends in a position proximal to the central axis.

This considerably simplifies the packaging operation, also in manual mode, since the ends of the arms place themselves correctly against the stems of the bunch of flowers without the need to keep the arms tightened against the stems while putting the closing raffia cordage on. Furthermore, if the bunch of flowers has little size and weight, the pressure exerted by the ending portions of the arms can also be sufficient to keep the bunch of flowers in the correct position even without the need to put the raffia cordage on.

A further advantage of the solution proposed with the present invention is that, in case the stems of the bunch of flowers are sufficiently robust or compact, at the same time of the introduction of the bunch in the support, a light pressure can be exerted on the bottom wall to allow almost automatically closing the arms.

Anyway, the pressure on the bottom wall can simply be manually exerted with one finger, with a rigid stem or with a stick that can be inserted between the arms or between the flowers.

The support is preferably provided with suitable bearing means placed below the base element and extending downwards for a length greater than the extent of the maximum deformation of the bottom wall.

In this way, the support structure according to the invention can easily be activated in closing, i.e. when the bottom wall is led to the stable concave shape, by keeping it leant on a plane. This further allows maintaining stable the packaging leant on a plane when the support is in the closed condition.

The bearing means preferably have a contour rounded at least in their lower part, in order to avoid making holes in the sheet of plastic material enclosing the structure. In a possible embodiment, the bearing means can for example be integral with the base element and be integrally made with the same or, according to another embodiment, can be constituted by a lower portion of the arms.

The base element of the support can comprise a perimetrical edge extending between the arms and is integrally made with the base element and with the arms.

To ease the correct elastic deformation of the bottom wall, the edge preferably comprises a plurality of notches arranged between the arms and uniformly distributed along all the perimeter of the edge.

The ending portions of the arms can advantageously include a restraining surface, for example at least one teeth or a protruding hook, or else a notch or the like, as a closing element, for example a raffia cordage or the like.

For example, as an alternative to the raffia cordage, the closing element can be constituted by a closing string or tie-wrap made in a single piece with the support, i.e. of the same material, and can be made detachable at a pre-engraved portion linking to the support.

A support according to the present invention can be made as a single piece and of a polymeric material, for example by a single molding operation.

The shapes a support according to the present invention can take are among the most varied ones and can comprise circular, oval or polygonal plan-shapes.

Further characteristics and advantages of the present invention will be more evident from the following specification of some embodiments depicted for illustrative purposes and without limitation, with reference to the accompanying drawings, wherein:
- Figure 1 is a perspective elevation view of a support for bunches or bouquets of flowers according to a possible embodiment of the present invention;
- Figure 2 is a schematic sectional view of the support of Figure 1 wherein the bottom wall is in a stable convex shape, with the support in the "open" condition;
- Figure 3 is a schematic sectional view of the support of Figure 1 wherein the bottom wall is in a stable concave shape, with the support in the "closed" condition;
- Figure 4 is a schematic sectional view of another embodiment of a support in the "open" condition;
- Figure 5 is a schematic sectional view of the support of Figure 4 in the "closed" condition;
- Figure 6A is a perspective elevation view of another embodiment of a support according to the present invention;
- Figure 6B is a plan view of another embodiment of a support according to the present invention;
- Figures 7A-7E are perspective elevation views of further embodiments of a support according to the present invention;
- Figures 8A-8E are front elevation views of some possible embodiments of the ends of the arms of a support according to the present invention; and
- Figures 9A-9C are front elevation views of other possible embodiments of the ends of the arms of a support according to the present invention.

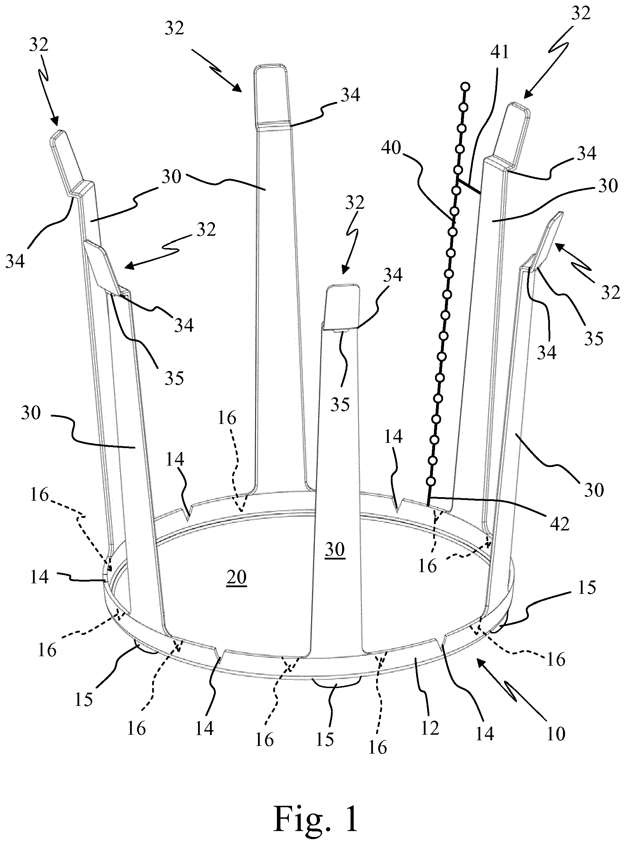

In the embodiment depicted in Figure 1, a support for bunches or bouquets of flowers comprises a base element 10 provided with a bottom wall 20 from which a plurality of arms 30 extends, the latter being distributed preferably in equidistant positions along the perimeter of the base element 10.

Below the base element 10 bearing feet 15 are provided and distributed for example in equidistant positions close to the perimeter of the base element 10, that for example can be made as a single piece with the base element 10 and preferably have a contour rounded in the lower part to avoid making holes in the sheet of plastic material wrapping the support.

In the embodiment depicted in Figure 1, the base element 10 also comprises a perimetrical edge extending between the arms 30 and is integral, in particular made as a single piece, with the base element 10 and with the arms 30.

The edge 12 comprises a plurality of notches 14 arranged in substantially equidistant positions among the arms 30. Further notches 16, depicted with dashed lines, can also be provided as an alternative or in combination, in positions adjacent to the arms.

Each of the arms 30 has an ending portion 32 including a restraining surface 34 to restrain a closing string or tie-wrap, such as for example raffia cordage or the like. On the surface 34 a protruding tooth 35 can also be provided, allowing keeping in position the closing string or tie-wrap also in case of loosening. As an alternative or in combination with the tooth 35, slots, holes or notches can be provided, depending on the shape taken by the closing string or tie-wrap that have to be kept in position.

In the embodiment depicted in Figure 1 a closing string 40 can also be provided, herein below depicted in the form of a dot-chain, made in a single piece with the support and connected for example by a filament 41 to the end of one of the arms 30 and/or to the base element 30 by a filament 42. The closing string 40 can also be kept constrained to the arm 30 and rotated to be wrapped at the restraining surfaces 34. As an alternative, the closing string 40 can be detached at a pre-engraved connecting portion facilitating its separation.

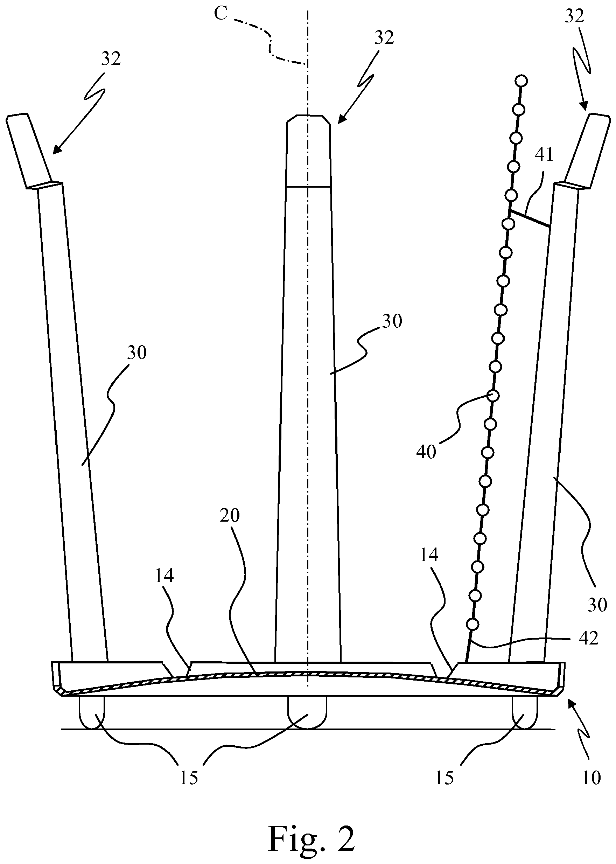

The support of Figure 1 is schematically depicted with a sectional view of Figure 2, wherein the bottom wall 20 starting from a convex shape is highlighted. In this condition, the support is "open", i.e. with the free ends of portions 32 of the arms 30 that are in a position distal from the central axis C perpendicular to the bottom wall 20 of the base element 10. In this condition the stems of the flowers can easily be inserted from above among the arms 30.

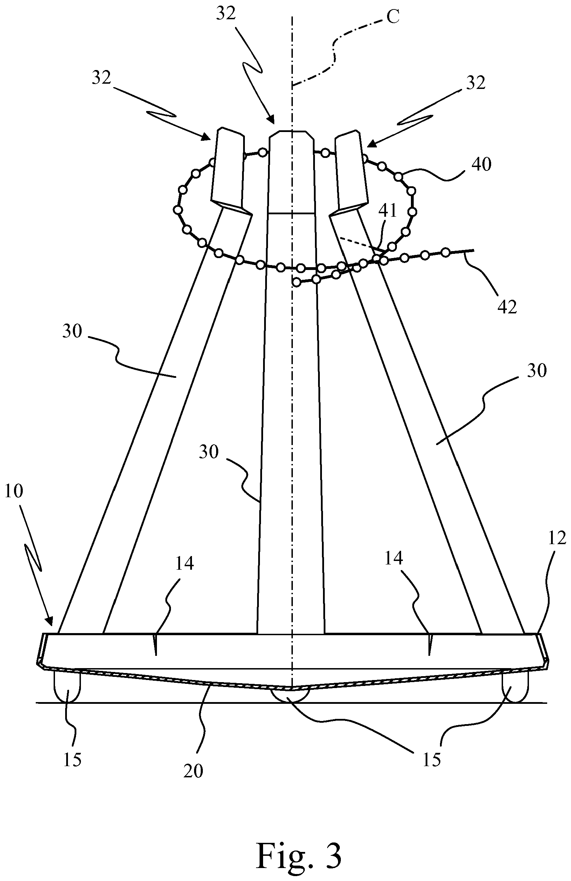

The convex shape of the bottom wall 20 depicted in Figure 2 is stable, but it can be modified by applying a pressure on the bottom wall 20 until giving it a concave shape, stable too, as depicted in the view of Figure 3. The bottom wall 20, as well as the remaining parts of the support, is in fact made of a polymeric material that can be elastically deformed.

As can be noted in Figure 3 the deformation of the bottom wall 20, in its stable concave shape, causes the support to be led to a "closed" condition, i.e. a condition wherein the free ends of portions 32 of the arms 30 are in a position proximal to the central axis C perpendicular to the bottom wall 20 of the base element 10. Thus, the closing string or tie-wrap 40 can be detached from the constraint, or for example left partially connected at the end of one of the arms, and used to tie the ends 32 of the arms 30 around the stems of the bunch of flowers. In Figure 3 it can also be noted that the notches 14, present on the edge 12, close to allow the resulting inward deformation of the edge 12.

Thus, by comparison between Figures 2 and 3, it can be understood that the deformation of the bottom wall 20 from its convex shape to the concave shape, by simply applying a light pressure on the bottom wall 20, practically allows automatically closing the arms 30 of the support to immobilize the stems of the flower bunch inserted in the support.

In the embodiments heretofore described, the feet 15 acting as bearing means extend downwards for a length greater than the extent of maximum deformation of the bottom wall 20, so that to allow the complete deformation of the bottom wall 20 until reaching its stable concave shape still keeping a stable footing on a plane.

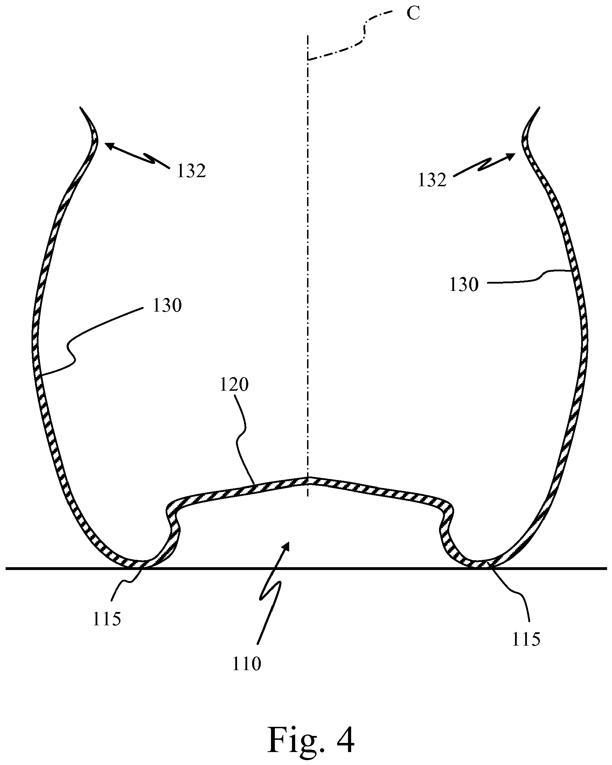

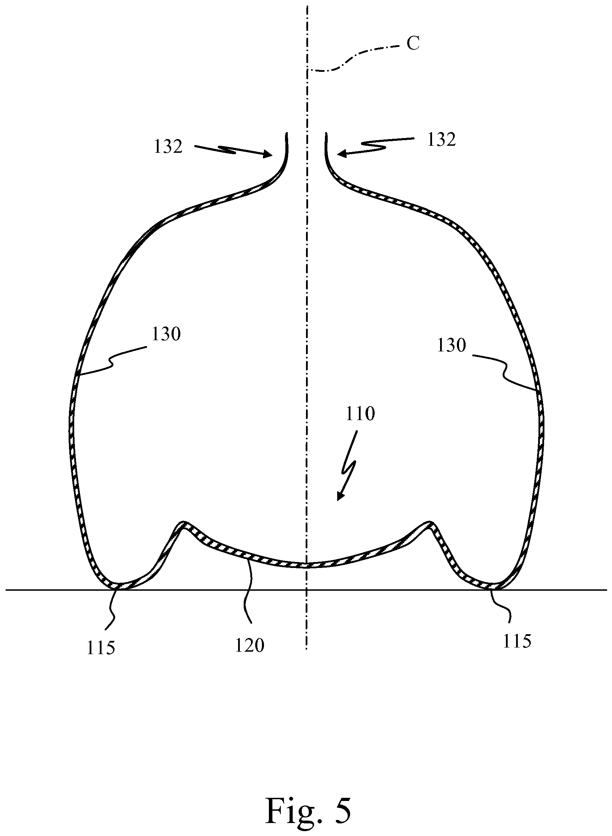

In Figures 4 and 5 another embodiment of a support according to the present invention is schematically depicted, wherein for the sake of simplicity only two arms 130 are depicted, but it is well understood that the arms can be much more and can also have ending portions 132 shaped differently.

Also the bottom wall 120 is elastically deformable between a stable convex shape, wherein the free ends of the portions 132 of the arms 130 are in a position distal from the central axis C perpendicular to the bottom wall 120 (Figure 4), and a stable concave shape wherein the free ends of the portions 132 of the arms 130 are in a position proximal to the central axis C perpendicular to the bottom wall 120 (Figure 5). The particular convex shape of the arms 130 allows making a support that can also take a substantially spherical shape when in the closed condition, thus making the bouquet looking nice from an aesthetic point of view. For example, the support in the open condition can take the shape of a blossomed flower wherein the arms 130 reproduce the petals, whereas in the closed condition the support takes the typical shape of a bud.

In this embodiment, the base element 110 is substantially constituted by the entire bottom wall 120, whereas the bearing means 115 are constituted by a suitably shaped lower portion of the arms 130 themselves.

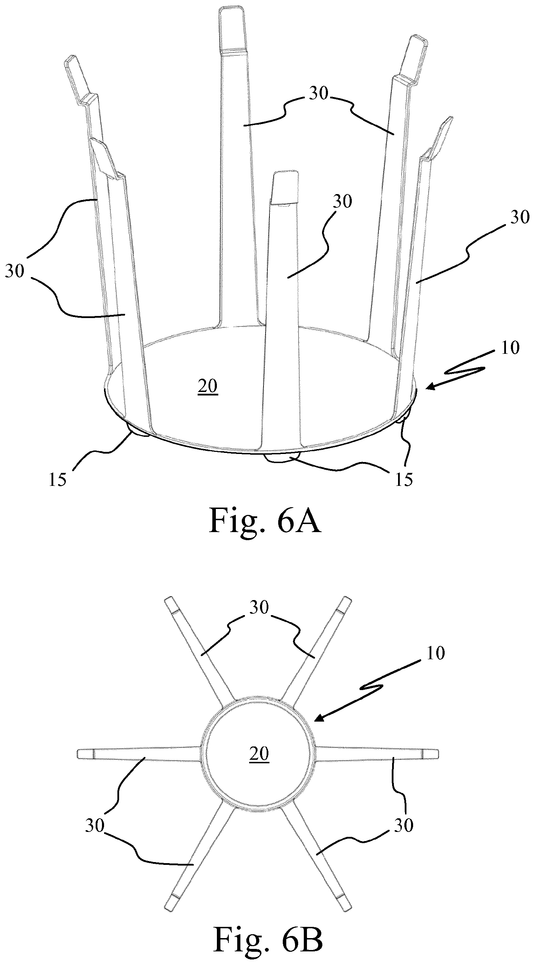

In the scope of the present invention other embodiments can be provided. For example, in the view of Figure 6A, the support is substantially similar to that of Figures 1-3, with the only difference is that the base element 10 has no perimetrical edge. In the embodiment depicted in the plan view of Figure 6B, the arms 30 of the support in the open condition are orientated along directions substantially parallel to the base element 10. In this case, the deformation of the bottom wall 20 to the concave stable configuration must be sufficiently pronounced to lead the arms 30 in a position similar to that depicted in Figure 3.

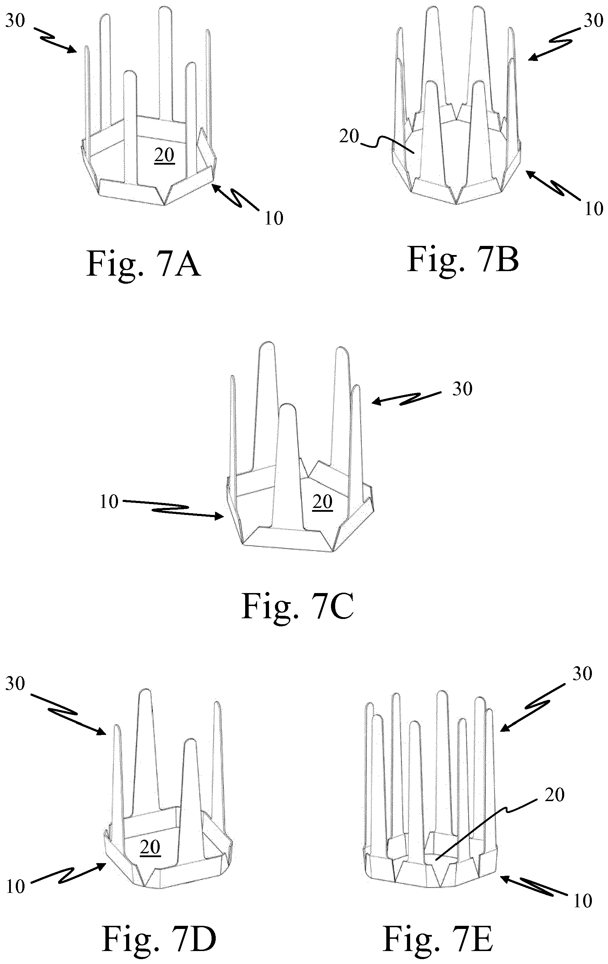

Further embodiments of a support according to the present invention are schematically depicted in Figures 7A-7E, wherein supports are depicted and have various polygonal shapes in plan view, with number and shape of the arms different from what depicted so far.

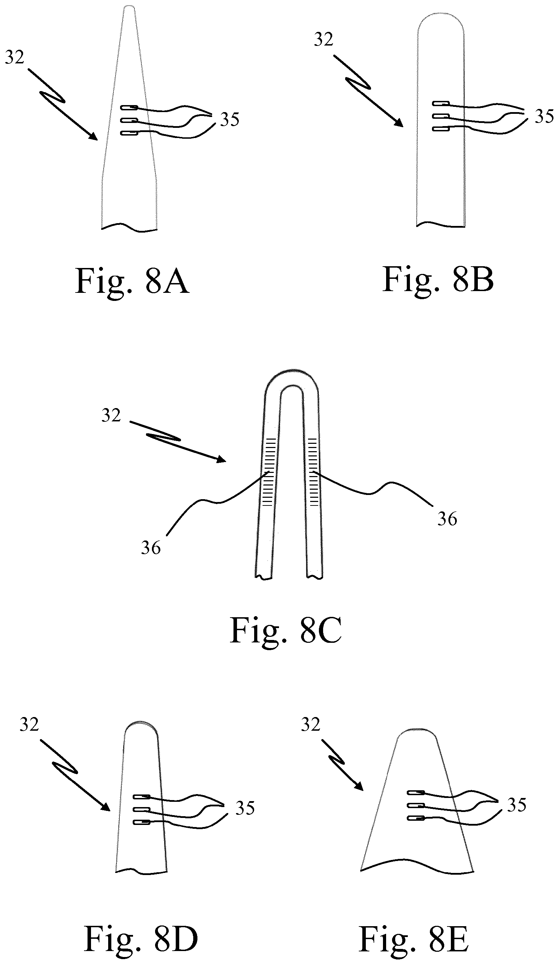

In the same way, the ending portions 32 of the arms 30 can have several shapes, some of which are depicted in Figures 8A-8E, and can comprise for example stop teeth 35 for the closing string or tie-wrap, or rough or knurled surfaces 36 (Figure 8C).

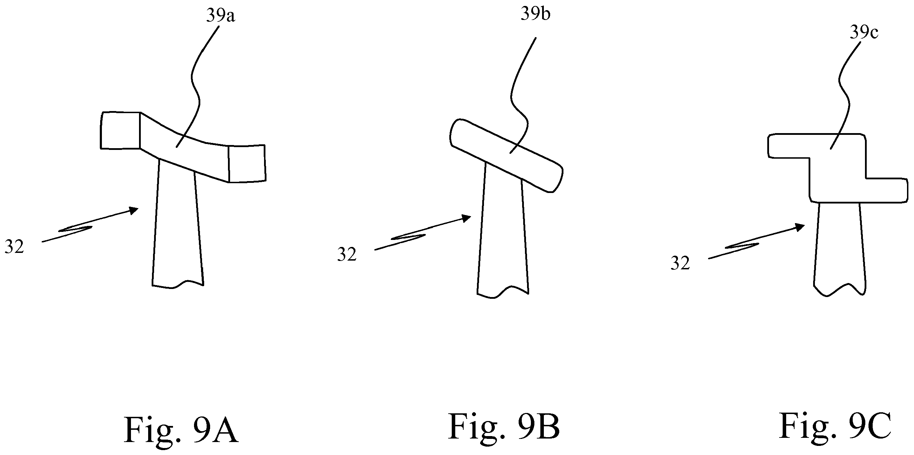

Figures 9A-9C depict other embodiments of the ending portions 32 of the arms 30, wherein the ends 39a, 39b and 39c are shaped to overlap, as a whole or in part, when the support is in the closed condition so as to form a retaining ring around the stems of the bunches of flowers.

Further modifications can be made to the embodiments herein depicted for illustrative purposes, without departing from the scope of the present invention as defined by the attached claims. For example, the bottom wall 20 or 120 of the support can also have a differentiated thickness between the central part and the peripheral part instead of a uniform thickness as depicted until now. A different thickness in the center could be useful for example to have a different bending degree in closing. In the same way also the arms, to keep the stems in vertical position, can be in a different number and take different shapes from what depicted herein.

Furthermore, even if it has been explicitly referred to fresh floral arrangements, a support according to the present invention is also suitable for use with dried or artificial flowers that don't need a water reserve.

## Claims

1. A support for bunches or bouquets of flowers, comprising a base element (10, 110) having a bottom wall (20, 120) and a plurality of arms (30, 130) extending from said base element (10, 110) and which are distributed along the perimeter of said base element (10, 110), **characterized in that** the bottom wall (20, 120) of said base element (10, 110) is elastically deformable between a stable convex shape, at which the free ends (32, 132) of said arms (30, 130) are in a position distal from the central axis (C) perpendicular to the bottom wall (20, 120) of said base element (10, 110), and a stable concave shape, at which the free ends (32, 132) of said arms (30, 130) are in a position proximal to the central axis (C) perpendicular to the bottom wall (20, 120) of said base element (10, 110).

2. The support according to claim 1, **characterized by** comprising bearing means (15, 115) placed below said base element (10, 110), said bearing means (15, 115) extending downwards for a length greater than the extent of maximum deformation of said bottom wall (20, 120).

3. The support according to claim 2, wherein said bearing means (15, 115) have a contour rounded at least in their lower part.

4. The support according to claim 2, wherein said bearing means (15) are integral with said base element (10).

5. The support according to claim 2, wherein said bearing means (115) are constituted by a lower portion of said arms (130).

6. The support according to claim 1, wherein said base element (10) comprises a perimetrical edge (12) extending between said arms (30) and being integral with said base element (10) and said arms (30).

7. The support according to claim 6, wherein said edge (12) comprises a plurality of notches (14) arranged between said arms (30).

8. The support according to claim 1, wherein the ending portions (32, 132) of said arms (30, 130) include a restraining surface (34) to restrain a closing string or tie-wrap.

9. The support according to claim 1, **characterized by** comprising at least one string (40) or tie-wrap made in a single piece with the support.

10. The support according to claim 1, **characterized in that** said base element (10, 110) has a circular, oval or polygonal plan-shape.

11. The support according to any one of the preceding claims, **characterized in that** it is made as a single piece and of a polymeric material.

## Patentansprüche

1. Ein Träger für Blumengebinde oder Blumensträuße, umfassend ein Basiselement (10, 110) mit einer Bodenwand (20, 120) und einer Vielzahl von Armen (30, 130), die sich von dem Basiselement (10, 110) erstrecken und entlang des Umfangs des Basiselementes (10, 110) verteilt sind, **dadurch gekennzeichnet, dass** sich die Bodenwand (20, 120) des Basiselementes (10, 110) elastisch verformbar zwischen einer stabilen konvexen Form, bei der sich die freien Enden (32, 132) der Arme (30, 130) in einer Position distal von der Mittelachse (C) senkrecht zur Bodenwand (20, 120) des Basiselements (10, 110) befinden, und einer stabilen konkaven Form, an der sich die freien Enden (32, 132) der Arme (30, 130) in einer Position nahe der zentralen Achse (C) senkrecht zur Bodenwand (20, 120) des Basiselements (10, 110) befinden, befindet.

2. Der Träger gemäß Anspruch 1, **dadurch gekennzeichnet, dass** er Lagermittel (15, 115) umfasst, die unter dem Basiselement (10, 110) angeordnet sind, wobei sich die Lagermittel (15, 115) um eine Länge nach unten erstrecken, die größer ist als das Ausmaß der maximalen Verformung der Bodenwand (20, 120).

3. Der Träger gemäß Anspruch 2, wobei die Lagermittel (15, 115) eine Kontur aufweisen, die zumindest in ihrem unteren Teil abgerundet ist.

4. Der Träger gemäß Anspruch 2, bei dem die Lagermittel (15) einstückig mit dem Basiselement (10) sind.

5. Der Träger gemäß Anspruch 2, wobei die Lagermittel (115) durch einen unteren Abschnitt der Arme (130) gebildet sind.

6. Der Träger gemäß Anspruch 1, bei dem das Basiselement (10) eine Umfangskante (12) aufweist, die sich zwischen den Armen (30) erstreckt und mit dem Basiselement (10) und den Armen (30) einstückig ist.

7. Der Träger gemäß Anspruch 6, wobei die Kante (12) eine Vielzahl von Kerben (14) aufweist, die zwischen den Armen (30) angeordnet sind.

8. Der Träger gemäß Anspruch 1, bei dem die Endabschnitte (32, 132) der Arme (30,130) eine Rückhaltefläche (34) aufweisen, um eine Schließschnur oder einen Bindewickel festzuhalten.

9. Der Träger gemäß Anspruch 1, **dadurch gekennzeichnet, dass** er mindestens eine Schnur (40) oder einen Kabelwickel umfasst, der mit dem Träger einstückig ausgebildet ist.

10. Der Träger gemäß Anspruch 1, **dadurch gekennzeichnet, dass** das Basiselement (10, 110) eine kreisförmige, ovale oder mehreckige Planform hat.

11. Der Träger gemäß irgendeinem der vorhergehenden Ansprüche, **dadurch gekennzeichnet, dass** er einstückig und aus einem polymeren Material gefertigt ist.

## Revendications

1. Support pour bottes ou bouquets de fleurs, comprenant un élément de base (10, 110) ayant une paroi inférieure (20, 120) et une pluralité de bras (30, 130) s'étendant dudit élément de base (10, 110) et qui sont distribués le long du périmètre dudit élément de base (10, 110), **caractérisé en ce que** la paroi inférieure (20, 120) dudit élément de base (10, 110) peut se déformer de manière élastique entre une forme convexe stable, dans laquelle les extrémités libres (32, 132) desdits bras (30, 130) sont dans une position distale depuis l'axe central (C) perpendiculaire à la paroi inférieure (20, 120) dudit élément de base (10, 110) et une forme concave stable, dans laquelle les extrémités libres (32, 132) desdits bras (30, 130) sont dans une position proximale à l'axe central (C) perpendiculaire à la paroi inférieure (20, 120) dudit élément de base (10, 110).

2. Support selon la revendication 1, **caractérisé en ce qu'**il comprend des moyens de support (15, 115) placés en dessous dudit élément de base (10, 110), lesdits moyens de support (15, 115) s'étendant vers le bas sur une longueur supérieure à l'extension de déformation maximale de ladite paroi inférieure (20, 120).

3. Support selon la revendication 2, dans lequel lesdits moyens de support (15, 115) ont un contour arrondi au moins dans leur partie inférieure.

4. Support selon la revendication 2, dans lequel lesdits moyens de support (15) sont d'un seul tenant avec ledit élément de base (10).

5. Support selon la revendication 2, dans lequel lesdits moyens de support (115) sont constitués par une partie inférieure desdits bras (130).

6. Support selon la revendication 1, dans lequel ledit élément de base (10) comprend un bord périmétrique (12) s'étendant entre lesdits bras (30) et d'un seul tenant avec ledit élément de base (10) et lesdits bras (30).

7. Support selon la revendication 6, dans lequel ledit bord (12) comprend une pluralité d'encoches (14) agencées entre lesdits bras (30).

8. Support selon la revendication 1, dans lequel les parties terminales (32, 132) desdits bras (30, 130) comprennent une surface de retenue (34) pour retenir un cordon de fermeture ou un enroulement de fixation.

9. Support selon la revendication 1, **caractérisé en ce qu'**il comprend au moins un cordon (40) ou un enroulement de fixation constitué d'un seul tenant avec le support.

10. Support selon la revendication 1, **caractérisé en ce que** ledit élément de base (10, 110) a une forme circulaire, ovale ou polygonale en plan.

11. Support selon l'une quelconque des revendications précédentes, **caractérisé en ce qu'**il est constitué d'une seule pièce et dans un matériau polymère.
